(19)

Europäisches
Patentamt
European
Patent Office
Office européen
des brevets

(11) **EP 1 886 740 A1**

(12) **EUROPEAN PATENT APPLICATION**
published in accordance with Art. 153(4) EPC

(43) Date of publication:
**13.02.2008 Bulletin 2008/07**

(21) Application number: **06746471.9**

(22) Date of filing: **16.05.2006**

(51) Int Cl.:
*B21D 41/04* (2006.01)     *B21D 51/26* (2006.01)
*B65D 6/30* (2006.01)     *H01M 2/02* (2006.01)

(86) International application number:
**PCT/JP2006/309757**

(87) International publication number:
**WO 2006/123666 (23.11.2006 Gazette 2006/47)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.05.2005 JP 2005144046
17.05.2005 JP 2005144407
17.05.2005 JP 2005144414
17.05.2005 JP 2005144490**

(71) Applicants:
• **TOYO SEIKAN KAISHA, LTD.**
**Tokyo 100-8522 (JP)**
• **HONDA MOTOR CO., LTD.**
**Tokyo 107-8556 (JP)**

(72) Inventors:
• **HIROTSU, Munemitsu**
**c/o Technology&Packaging Development
Division
Yokohama-shi
Kanagawa
230-0001 (JP)**
• **KANEDA, Shinichi**
**c/o Technology&Packaging Development
Division
Yokohama-shi
Kanagawa
230-0001 (JP)**
• **SHIRANE, Zenrou**
**c/o Technology&Packaging Development
Division
Yokohama-shi
Kanagawa
230-0001 (JP)**
• **OOHORI, Kei**
**c/o Technology&Packaging Development
Division
Yokohama-shi
Kanagawa
230-0001 (JP)**

• **TODA, Hitoshi**
**c/o Yokohama Plant
Yokohama-shi
Kanagawa
230-0001 (JP)**
• **ISHII, Masayuki**
**c/o Technology&Packaging Development
Division
Yokohama-shi
Kanagawa
230-0001 (JP)**
• **YASUDA, Norifumi**
**c/o Honda R & D Co., Ltd.
Wako-shi Saitama 351-0193 (JP)**
• **KATOH, Hisashi**
**c/o Honda R & D Co., Ltd.
Wako-shi Saitama 351-0193 (JP)**
• **IWAIDA, Manabu**
**c/o Honda R & D Co., Ltd.
Wako-shi Saitama 351-0193 (JP)**
• **YAMAMOTO, Koichi**
**c/o Honda R & D Co., Ltd.
Wako-shi Saitama 351-0193 (JP)**
• **MORI, Shigeaki**
**c/o Honda R & D Co., Ltd.
Wako-shi Saitama 351-0193 (JP)**
• **YAMAGAMI, Takeshi**
**c/o Honda R & D Co., Ltd.
Wako-shi Saitama 351-0193 (JP)**
• **OYAMA, Shigeki**
**c/o Honda R & D Co., Ltd.
Wako-shi Saitama 351-0193 (JP)**

(74) Representative: **Vossius & Partner
Siebertstrasse 4
81675 München (DE)**

EP 1 886 740 A1

(54)   **THREE-PIECE SQUARE CAN AND METHOD OF MANUFACTURING THE SAME**

(57)   The present invention provides a three-piece rectangular can which can overcome drawbacks (joint defect) of a can body joint portion of a three-piece can, and is of a new type which overcomes shortage of a can body strength which a two-piece can possesses, and exhibits excellent liquid leakage resistance, excellent can body strength and excellent heat radiation property or the like even when the can is used as a casing of a battery or electric equipment. For this end, the three-piece rectangular can of the present invention is formed such that a circular blank formed of an aluminum plate which forms an organic film on at least one surface thereof is formed into a bottomed circular can by deep drawing such that the organic film forms an inner side of the can, a cylindrical sleeve having no seam on a side surface thereof is formed by cutting a can bottom of the bottomed circular can, a rectangular can body portion having no seam on a side surface thereof is formed by deforming the cylindrical sleeve into a rectangular shape, a necking formed portion is formed by applying necking forming to opening portions at both ends of the rectangular can body, and a top lid and a bottom lid are mounted on the opening portions at both ends of the rectangular can body by double seaming by way of an organic compound.

Fig.1

## Description

Field of the Invention

The present invention relates to a new type of rectangular can which can eliminate a joint defect at a joint portion of a can body and has an excellent strength and, more particularly to a three-piece rectangular can which is applicable to a battery casing and various kinds of casings for electrical equipment and a manufacturing method thereof.

Background of the Invention

Recently, along with progress in electric technology, the development of high performance, the miniaturization, the realization of high energy and the improvement on portable structure of electronic equipment, and the realization of high performance of an electrically driven automobile (for example, a so-called hybrid vehicle) have advanced. Accordingly, casings for various kinds of batteries which are used as power sources for driving the electronic apparatus and the electrically driven car, particularly, casings for electric double-layered capacitors have been required to exhibit an excellent can body strength, an excellent liquid leakage resistance, an excellent air-tightness, an excellent heat radiation property and the like.
With respect to the content leakage proof and the air-tightness of the battery casings and the casings of various kinds of electrical equipment, it is necessary to hold the high air-tightness for preventing the leakage of contents from the casings for a long period after filling a power generating element in the casings. In many cases, the content leakage proof and the air-tightness of the casings are influenced by a joint state of a can body of a can, a sealed state between the can body and a can lid or the like.
In general, a metal can which constitutes a three-piece can is configured such that a side surface of the can body is formed by joining such as welding, adhering, caulking or the like (side seam), and joint portions for mounting a top lid and a bottom lid are formed on opening portions at both ends of the can body.
The three-piece can has the side seam in the can body and the joint portions with the lids and hence, there exists a drawback that a leakage of contents attributed to a joint defect is liable to occur. However, due to the top lid and the bottom lid which are joined to both opening portions of the can body, the three-piece can has an advantageous effect that a can body shape is reinforced by the top lid and the bottom lid joined to both opening portions of the can body portion so that a deformation resistance strength of the can body can be enhanced.
Further, there has been also known a technique which forms surface irregularities which are referred to as beads in a state that the beads are formed on peripheries of the can body for further enhancing the can body strength. However, the technique has a drawback that the sealing property at the side seam of the can body is liable to be easily decreased due to the formation of the beads.
As another type of the metal can, there has been known a two-piece can which is constituted of two parts. That is, the two-piece can is constituted by mounting a top lid on an opening portion of a circular or a rectangular bottomed can which is formed by deep drawing a flat blanked plate or by drawing and ironing a flat blanked plate. In the two-piece can, the top lid is mounted on only the opening portion which is formed by drawing and hence, a shape of a can bottom side formed by drawing is limited by restrictions attributed to conditions such as mold designing or a material for drawing whereby the enhancement of the rigidity of the can bottom side is also limited.
Further, with respect to the three-piece can or the two-piece can, as a sealing method for mounting the lid on the opening portion, laser welding, caulking, double seaming or the like is used in general.
Further, with respect to a battery casing used for housing a large number of batteries connected with each other, from a viewpoint that a rectangular-shaped battery casing can be arranged without a gap and can enhance a volumetric efficiency compared to a cylindrical-shaped battery casing, a profile shape of the battery casing is formed into a rectangular shape.
As an example which uses the above-mentioned metal can as a casing for electric equipment, Japanese Patent Laid-open 2002-343310 (patent document 1) proposes a two-piece can which sandwiches an insulator between a casing body and a lid member, and seals an opening portion of the can body by double seaming.
Japanese Patent 3427216 (patent document 2) also proposes a battery casing in which a resin film such as a polypropylene film or the like is preliminarily formed on a metal plate by coating and the metal plate is configured to function as a gasket at the time of sealing.
The two-piece can which is proposed in the patent document 1 and the patent document 2 is formed of a can which seals an opening portion thereof by double seaming and hence, a liquid leakage resistance can be enhanced. However, the properties which the casing of the battery or the electric equipment is required to possess are not limited to the liquid leakage resistance and the volumetric efficiency of a can body.
Accordingly, it is an object of the present invention to provide a can which can further enhance a can body strength which is a property that a storage casing is required to possess and, at the same time, it is also an object of the present invention to provide a can which exhibits a high heat radiation property to cope with the increase of the generation of heat which is increased along a recent demand for high battery energy.

Further, it is another object of the present invention to provide a three-piece rectangular can which overcomes a drawback (joint defect) at a joint portion of a can body (side seam) while making use of favorable properties of the three-piece can.

Further, it is still another object of the present invention to provide a new type of three-piece rectangular can which can overcome an insufficient can body strength attributed to the structural limitation imposed on a bottom portion of the two-piece can.

Further, it is a further object of the present invention to provide a three-piece can which exhibits excellent liquid leakage resistance, an excellent can body strength and an excellent heat radiation property or the like also as a casing for housing various kinds of batteries, electric equipment or the like.

Further, it is a still further object of the present invention to provide a battery container which exhibits excellent corrosion resistance against an electrolytic solution which contains highly corrosive propylene carbonate salt as a main component. Particularly, it is an object of the present invention to provide a battery container which exhibits excellent corrosion resistance at four corner portions thereof.

Further, it is a further object of the present invention to provide a necking method which can deform a rectangular can into a stable shape by applying necking forming.

Patent Document 1: Japanese patent laid-open 2002-343310
Patent Document 2: Japanese Patent 3427216

Disclosure of the Invention

A three-piece rectangular can according to claim 1 of the present invention is directed to a three-piece rectangular can in which a necking formed portion is formed by applying necking forming to opening portions at both ends of a rectangular can body having no seam on a side surface thereof, and a top lid and a bottom lid are seamed by double seaming to the opening portions at both ends of the rectangular can body by way of an organic compound, wherein the three-piece rectangular can is formed of an aluminum plate having an organic film formed on at least one surface thereof, and the organic film is formed on at least inner surfaces of the rectangular can body, the top lid and the bottom lid.

As described above, since the rectangular can body, the top lid and the bottom lid which are formed by applying the organic film such as a polyester film to the aluminum plate are seamed by double seaming by way of the organic compound, the three-piece rectangular can exhibits an excellent liquid leakage resistance and, at the same time, the three-piece rectangular can has no seams which the conventional three-piece can has on the side surface of the can body and hence, it is possible to prevent the generation of corrosion caused by a defect of a resin coating film which is liable to occur at a seam portion of the three-piece can.

The three-piece rectangular can according to claim 2 is characterized in that, in the constitution described in claim 1, the rectangular can body having no seam on the side surface thereof is formed such that a cylindrical sleeve having no seam on a side surface thereof which is formed by cutting a bottom portion of a bottomed circular can from a circular blank by deep drawing is deformed into a rectangular sleeve and the rectangular sleeve has the opening portions at both ends thereof, and the necking formed portion is formed on the opening portions by applying necking forming to the opening portions.

The rectangular can body is formed such that a bottomless cylindrical sleeve is formed by cutting the bottom portion of the bottomed circular can formed by deep-drawing from the circular blank and the bottomless cylindrical sleeve is deformed into a rectangular shape. Accordingly, it is unnecessary to use a complicated rectangular drawing die thus reducing the formation of defect portions such as drawing wrinkles in the can body attributed to defective drawing.

In general, a rectangular can is formed such that a rectangular blank is formed into a cylindrical shape and both sides of the cylindrical rectangular blank are joined to form a sleeve and, thereafter, the sleeve is sequentially formed into a rectangular shape. Alternatively, the rectangular can is formed using a rectangular drawing mold. To the contrary, according to the present invention, the rectangular can body having no seam on the side surface thereof is formed such that the bottomless cylindrical sleeve is formed by cutting the bottom portion of the bottomed circular can formed by deep-drawing and the bottomless cylindrical sleeve is deformed into a rectangular shape. Then, the necking forming is applied to the opening portions at both ends of the rectangular can body, and the top lid and the bottom lid are seamed to opening portions at both ends by double seaming. Accordingly, it is possible to easily manufacture a three-piece rectangular can having free sizes in the directions of length, width and height.

The three-piece rectangular can according to claim 3 is characterized in that, in the constitution described in claim 1, the rectangular can body having no seam on the side surface thereof is formed such that the cylindrical sleeve having no seam on a side surface thereof which is formed by cutting a bottom portion of a bottomed circular can from a circular blank by deep drawing is deformed into a rectangular sleeve and the rectangular sleeve has the opening portions at both ends thereof, and the necking formed portion is formed on the opening portions by applying necking forming to the opening portions and, thereafter, a plurality of beads is formed on the rectangular can body in a state that the beads surround the rectangular can body.

The plurality of beads is formed on the rectangular can body in a state that the beads surround the rectangular can body and hence, the rigidity of a can wall is increased by making use of the beads and the strength of the can body (deformation resistance strength against inner pressure and outer pressure, fall-resistant strength or the like). Further, when the three-piece rectangular can is used as a battery casing, the beads can increase a surface area of the can wall and hence, it is possible to enhance the radiation of heat thus suppressing the shortening of battery lifespan and the deterioration of the adhesiveness of the resin film to the can body.

Further, when a large number of battery casings is arranged, a non-contact gap is formed between valleys of the beads of the neighboring battery casings. Accordingly, the convection of air is generated thus realizing the efficient heat radiation.

The three-piece rectangular can according to claim 4 is characterized in that, in the constitution described in any one of claims 1 to 3, a through hole is formed in center portions of the top lid and the bottom lid which are mounted on the opening portions at both ends of the rectangular can body having no seam on the side surface thereof by double seaming, and an electrode is mounted in the through hole by way of an insulator.

In mounting the electrodes on both of the top lid and the bottom lid which are mounted on the opening portions at both ends of the rectangular can body by double seaming, the electrodes are mounted in the through holes formed in the center portions of the top lid and the bottom lid by way of the insulator and hence, it is possible to ensure the insulation between the electrodes and the can body.

The three-piece rectangular can according to claim 5 is characterized in that, in the constitution described in any one of claims 1 to 4, the top lid or the bottom lid of the three-piece rectangular can is formed of an aluminum plate to which a non-stretched polyester film which sets a degree of crystallization within a range from 20% to 40% by preheating treatment before forming is applied.

Accordingly, it is possible to prevent the generation of wrinkles on the polyester film at the time of manufacturing the lid.

The three-piece rectangular can according to claim 6 is characterized in that, in the constitution described in any one of claims 1 to 4, the three-piece rectangular can which is used as a battery container and is formed of an aluminum plate which applies a biaxially stretched polyester film to at least the inner surfaces of the rectangular can body, the top lid and the bottom lid.

Here, the biaxially stretched polyester film possesses an X-ray diffraction intensity ratio which satisfies $5 \geq I_A/I_B \geq 1$, wherein $I_A$ is an X-ray diffraction intensity on a diffraction plane which is parallel to a surface of the polyester film and has a surface distance of approximately 0.34nm (a CuKαX-ray diffraction angle being set to a value which falls within a range from 24° to 28°), and $I_B$ is an X-ray diffraction intensity on a diffraction plane which is parallel to the surface of the polyester film and has a surface distance of approximately 0.39nm (a CuKα-ray diffraction angle being set to a value which falls within a range from 21.5° to 24°).

Accordingly, the three-piece rectangular can of the present invention can excellently prevent the deterioration of the polyester resin film applied to an inner surface of a container by the corrosive liquid (an electrolytic solution) thus manufacturing an excellent battery container.

The manufacturing method of a three-piece rectangular can according to claim 7 is characterized in that a circular blank formed of an aluminum plate which forms an organic film on at least one surface thereof is formed into a bottomed circular can by deep drawing such that the organic film forms an inner side of the can, a cylindrical sleeve having no seam on a side surface thereof is formed by cutting a bottom portion of the bottomed circular can, a rectangular can body having no seam on a side surface thereof is formed by deforming the cylindrical sleeve into a rectangular shape, a necking formed portion is formed by applying necking forming to opening portions at both ends of the rectangular can body, and a top lid and a bottom lid are mounted on the opening portions at both ends of the rectangular can body by double seaming by way of an organic compound.

Due to such a constitution, in general, a rectangular can is formed such that a rectangular blank is formed into a cylindrical shape and both sides of the rectangular blank are joined to form a sleeve and, thereafter, the sleeve is sequentially formed into a rectangular shape. Alternatively, the rectangular can is formed using a rectangular drawing mold. To the contrary, according to the present invention, the rectangular can body portion having no seam on the side surface thereof is formed such that the bottomless cylindrical sleeve is formed by cutting the bottom portion of the bottomed circular can formed by deep-drawing and the bottomless cylindrical sleeve is deformed into a rectangular shape. Then, the necking forming is applied to the opening portions at both ends of the rectangular can body, and the top lid and the bottom lid are seamed to opening portions at both ends by double seaming. Accordingly, it is possible to easily manufacture a three-piece rectangular can having free sizes in the lengthwise direction, in the widthwise direction and in the height direction.

A necking method of a rectangular can according to claim 8 is characterized in that, in performing necking forming for squeezing an opening portion of a rectangular can body portion of a rectangular can, a first core is arranged in the inside of a necking formed portion of the rectangular can, a second split core which is expansible and shrinkable is arranged on a lower portion of the necking formed portion and, thereafter, the necking formed portion is formed using a necking die.

Due to such a constitution, besides supporting the necking formed portion on the first core, the lower portion of the necking formed portion is supported on the second core and hence, it is possible to form flat portions of the rectangular can in the same manner as the corner portions of the rectangular can thus obtaining a stable can shape and, at the same time, it is possible to form the can into a desired shape by necking forming. Further, also in applying the necking forming to the opening portions at both ends of the rectangular can body, by shrinking the second core, it is possible to facilitate a takeout operation of a product after necking forming.

A necking method of a rectangular can according to claim 9 is characterized in that, in the constitution described in claim 8, the rectangular can body portion is arranged outside the second core on a bolster, the second core is moved in an expansible manner in a state that the second core supports a lower portion of the necking formed portion and, thereafter, the necking formed portion is positioned on the second core by lowering the first core mounted on a slide, and the necking die is lowered to perform the necking forming.

Due to such a constitution, by lowering the slide toward the second core and the rectangular can which are set on the bolster, the first core can be set on the second core at a predetermined position and, thereafter, by further lowering the slide, the necking forming can be performed using the necking die. Accordingly, it is possible to form the rectangular can in accordance with steps substantially equal to steps of usual necking forming even when the first and second cores are used.

The necking method of a rectangular can according to claim 10 is characterized in that, in the constitution described in claim 8 or claim 9, the expansion and the shrinking of the second core and the insertion and the removal of the first core are performed in an interlocking manner with lowering and elevation of the slide.

Due to such a constitution, the expansion and the shrinking of the second core and the insertion and the removal of the first core are performed in an interlocking manner with lowering and elevation of the slide. Accordingly, in an interlocking manner with the elevation and the lowering of the slide, it is possible to bring the first and second cores into a set state in which the first core and the second core are set or into a removal state in which the first core and the second core are removed. Accordingly, the necking forming can be effectively performed without increasing the number of manufacturing steps.

Brief Explanation of the Drawings

Fig. 1 is a perspective view of a three-piece rectangular can of an embodiment 1 of the present invention.

Fig. 2 is a perspective view of a three-piece rectangular can of an embodiment 2 which mounts a top lid and a bottom lid on both opening ends of a can body portion having no seam on a side surface thereof on which beads are formed in a state that the beads surround the rectangular can body portion by double seaming.

Fig. 3 is a perspective view of a three-piece rectangular can of an embodiment 3 which is used as an electric double-layered capacitor casing.

Fig. 4 is a cross-sectional view for explaining a material for manufacturing the three-piece rectangular can.

Fig. 5 is a graph showing an X-ray diffraction spectrum of a biaxially stretched polyester film which is measured using an X-ray diffractometer.

Fig. 6 is an explanatory view of influences of preheating treatment and crystallization on the generation of film wrinkles.

Fig. 7 is an explanatory view showing manufacturing steps (first step to forth step) of the three-piece rectangular can.

Fig. 8 is an explanatory view showing manufacturing steps (fifth step to seventh step) of the three-piece rectangular can.

Fig. 9 is an explanatory view showing a principle of the constitution of the three-piece rectangular can in deforming a circular can into a rectangular shape.

Fig. 10(a) is a plan view and a front view of a rectangular can body portion before necking forming is applied, and Fig. 10(b) is a plan view and a front view of a rectangular can after the necking forming is applied.

Fig. 11(a) is a vertically cross-sectional view of a necking device before and after the necking forming is applied, and Fig. 11(b) is a plan view of a second core portion of the necking device before and after the necking forming is applied.

Fig. 12 is a view of steps of the necking forming of the rectangular can.

Fig. 13 is an explanatory cross-sectional view of an angle of an inclination surface of a necking die.

Fig. 14 is an explanatory view of double-seaming steps.

Fig. 15 is a schematic cross-sectional view of a rectangular can of an embodiment 3 which is used as an electric double-layered capacitor casing.

Best Mode for Carrying out the Invention

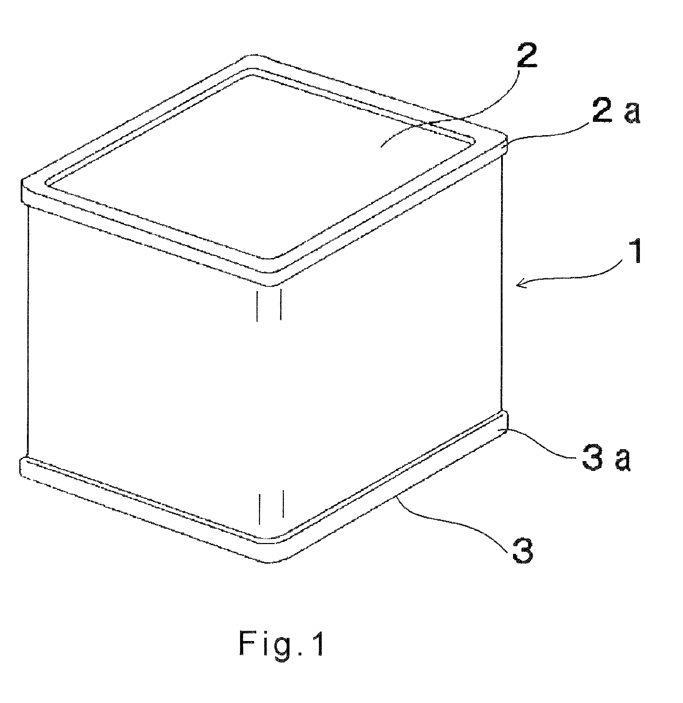

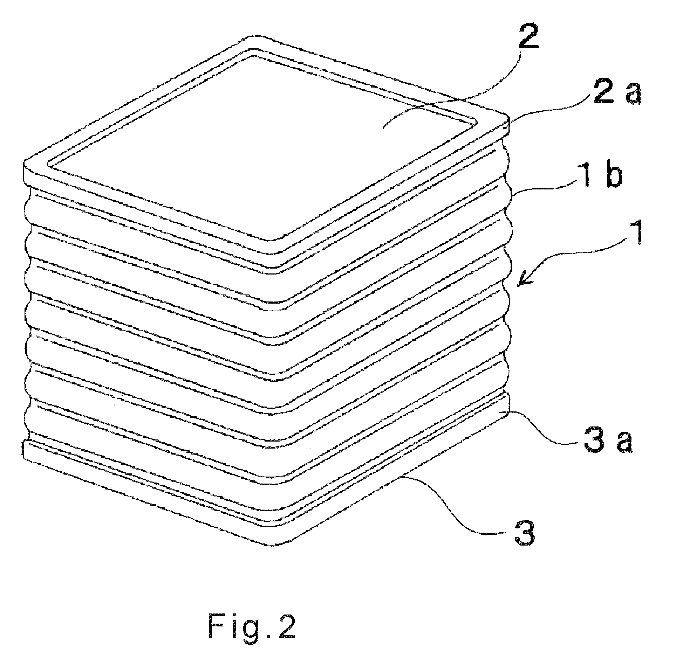

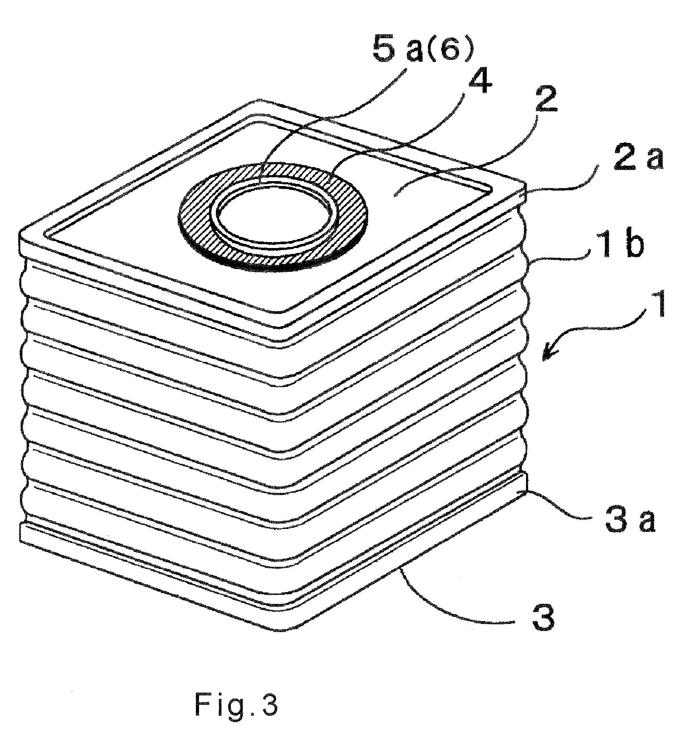

Hereinafter, a three-piece rectangular can according to the present invention is explained in detail. Fig. 1 is a perspective view of a three-piece rectangular can of an embodiment 1 of the present invention. Fig. 2 is a perspective view of a three-piece rectangular can of an embodiment 2 according to the present invention. A top lid and a bottom lid are mounted on both opening ends of a can body portion having no seam on a side surface thereof, and beads are formed on a rectangular can body by double seaming in a state that the beads surround the rectangular can body. Fig. 3 is a perspective view of a three-piece rectangular can of an embodiment 3 according to the present invention when the three-piece rectangular can shown in Fig. 2 is used as an electric double-layered capacitor casing.

In the embodiments 1 to 3, the three-piece rectangular can mounts a top lid 2 and a bottom lid 3 on both opening ends of a rectangular can body portion 1 having no seam on a side surface thereof by way of a top lid double seaming portion 2a and a bottom lid double seaming portion 3a. Further, in the three-piece rectangular can shown in Fig. 2, beads 1b are formed on the rectangular can body portion 1 in a state that the beads 1b surround the rectangular can body portion 1. Further, in the three-piece rectangular can shown in Fig. 3 which constitutes an electric double-layered capacitor casing, through holes 6 (a through hole formed in the bottom lid 3 not shown in the drawing) are formed in planar center portions of the top lid 2 and the bottom lid 3, and an upper electrode 5a is mounted in the through hole 6 by way of an insulator 4.

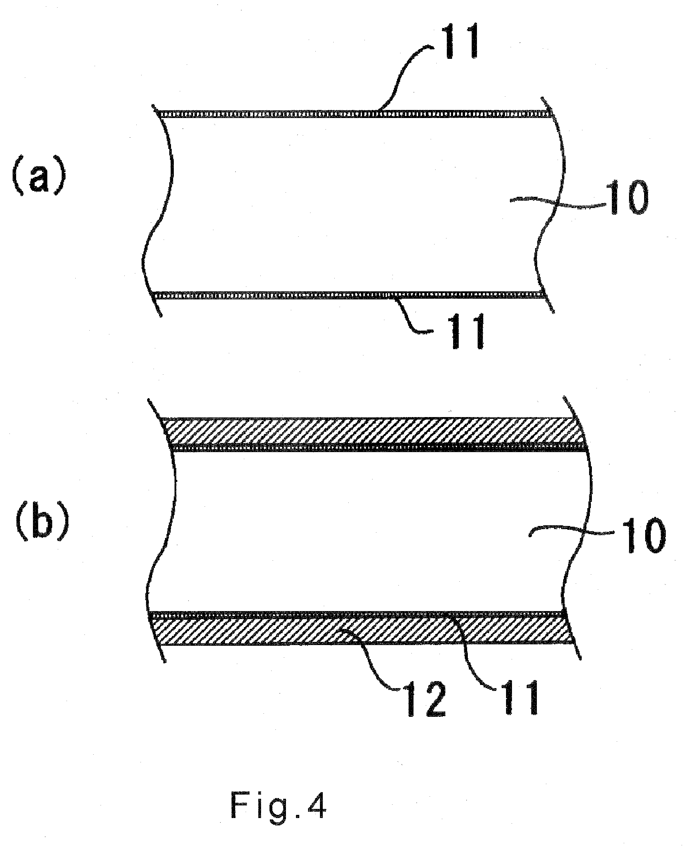

Fig. 4 is a cross-sectional view for explaining a material for forming the three-piece rectangular can of the present invention. A resin-covered aluminum plate is formed such that, as shown in Fig. 4(a), to both surfaces of an aluminum plate 10 which constitutes a base material, a surface treatment layer 11 is applied for enhancing the adhesiveness between an organic film and the aluminum plate 10 when the organic film such as a polyester film is formed on both surfaces of the aluminum plate 10, and the resin film (organic film) 12 described later is stacked on the surface treatment layer 11 as shown in Fig. 4(b).

Hereinafter, the aluminum plate which constitutes the base material, the surface treatment layer, the resin film, the film stacking method and the like are explained in detail.

(Aluminum plate)

As an aluminum plate which constitutes a base material of the three-piece rectangular can of the present invention, various kinds of aluminum materials, for example, aluminum alloys in the order of 3000, 5000 and 6000 described in JIS4000 can be named. Out of these aluminum alloys, the aluminum alloy in the order of 3000 has been preferably used. In forming the rectangular can body portion 1 of the present invention, from viewpoints of a can body strength, flange formability and the like, contents of Mn and Cu are preferably set as follows.

Mn can enhance a recrystallization temperature of aluminum alloy and, at the same time, can enhance the corrosion resistance of the can by changing a crystallization state of Mn in a form of Fe compound in the aluminum alloy and hence, it is preferable to add a quantity of Mn within a range from 1.0 to 1.5% (symbol % being % based on weight, the symbol % being used in the same manner hereinafter) to the aluminum plate. Cu can enhance the strength of the can and hence, it is preferable to add Cu within a range from 0.05 to 0.20% to the aluminum plate.

Here, it is possible to add other elements within predetermined ranges to the aluminum plate from the viewpoints of enhancing strength, formability, corrosion resistance and the like of the can.

In general, a plate thickness of the aluminum plate after the aluminum plate is formed into a rectangular can body portion 1 may preferably be set to a value which falls within a range from 0.1 to 1.0mm from viewpoints of a can body strength, flange formability and the like. However, a plate thickness of a side wall of the rectangular can body portion (the smallest value of the plate thickness of the aluminum plate except for the resin film) may preferably be set to 0.3mm or more by taking a withstand pressure of the can into consideration.

(Surface treatment)

It is preferable to form the surface treatment layer 11 on a surface of the aluminum plate 10 which constitutes the base material for enhancing the forming adhesiveness between the aluminum plate 10 and the resin film 12 which covers the aluminum plate 10. The above-mentioned surface treatment layer 11 may be formed by applying cold-rolling treatment to the aluminum plate 10 and, thereafter, by applying a surface treatment of organic or inorganic system including a chromic-phosphoric treatment to the aluminum plate 10 by immersing or spraying. Further, it is also possible to form the surface treatment layer on the aluminum plate 10 by coating. In forming the treatment film on the aluminum plate 10 by chromic-phosphoric treatment, from a viewpoint of ensuring the forming adhesiveness of the resin film which covers the aluminum plate 10, a total quantity of chromium may preferably be set to a value which falls within a range from 5 to 40mg/m$^2$, and may more preferably be set to a value which falls within a range from 15 to 30mg/m$^2$.

(Resin film)

At least on an inner surface side of the three-piece rectangular can, the resin film 12 is stacked on the surface of the aluminum plate 10 on which the surface treatment layer 11 is formed. As the resin film 12, a thermoplastic resin film having the excellent heat resistance, for example, a polyester film, a nylon film, a polypropylene film, a polycarbonate film or the like which has a thickness of 2 to 50$\mu$m can be named.
Further, as the polyester film, a non-stretched film which containsethylene terephthalate,ethylenebutyrate,and ethylene isophthalate as main components can be preferably used. Such a resin film is formed by using a T-die method or an inflation film-forming method.

Here, the non-stretched polyester film is preferably used when an emphasis is placed on measures or means to cope with defective sealing (leaking) by seaming attributed to wrinkles of the film covering the lid material after forming the lid. In this case, for enhancing the sealing property when the aluminum plate is used as the top lid member and the bottom lid member, the non-stretched polyester film is adhered to the aluminum plate and, thereafter, a degree of film crystallinity is increased to a value which falls within a range from 20 to 40% by preheating.
In using the polyester film as the thermoplastic resin film, other components may be also copolymerized. For example, as a dicarboxylic acid component which is copolymerized with the polyester film, a naphthalene dicarboxylic acid, a diphenyl dicarboxylic acid, a diphenyl sulphon dicarboxylic acid, a diphenoxy ethane dicarboxylic acid, a 5-sodium sulfo isophthalic acid, an aromatic dicarboxylic acid such as a phthalic acid, an aliphatic dicarboxylic acid such as an oxalic acid, a succinic acid, an adipic acid, a sebacic acid, a dimer acid, a maleic acid and a fumaric acid, an alicyclic dicarboxylic acid such as a cyclohexane dicarboxylic acid, and an oxycarboxylic acid such as a p-oxine benzoic acid or the like can be named.

Further, as a glycol component which is copolymerized with the polyester film, an aliphatic glycol such as propanediol, butanediol, pentanediol and neopentylglycol, an alicyclic glycol such as cyclohexane dimethanol, an aromatic glycol such as bisphenol A and bisphenol S, and a polyoxyethylene glycol such as a diethylene glycol and a polyethylene glycol and the like can be named. With respect to the above-mentioned dicarboxylic acid component and the glycol component, two or more kinds of components may be used in combination with each other.

(Polyethylene terephthalate film)

Further, when a polyethylene terephthalate film is used as the polyester film, it is preferable that 70mol% or more of dibasic acid component in the copolymerized polyester and, particularly, 75mol% or more of the dibasic acid component is formed of the terephthalic component, 70mol% or more of the diol component and, particularly, 75mol% or more of the diol component is formed of ethylene grycol, and 1 to 30mol% of the dibasic acid component and/or the diol component and, particularly, 5 to 25mol% of the dibasic acid component and/or the diol component are formed of a dibasic acid component except for the terephthalic acid and/or the diol component except for the ethylene grycol.

As the dibasic acid except for the terephthalic acid, one kind of or a combination of two or more kinds of an aromatic dicarboxylic acid such as an isophthalic acid, a phthalic acid and a naphthalene dicarboxylic acid; an alicyclic dicarboxylic acid such as a cyclohexane dicarboxylic acid; and an aliphatic dicarboxylic acid such as a succinic acid, an adipic acid, a sebacic acid and a dodecanedioic acid can be named. Further, as the diol component except for the ethylene grycol, one kind of or two kinds of a propylene glycol, 1, 4-butanediol, diethylene grycol, 1,6-hexylene grycol, cyclohexane dimethanol, and ethylene oxide adduct of the bisphenol A can be named.
The combination of these co-monomers is required to have a melting point of the copolymerized polyester which falls within the above-mentioned ranges.

Copolyester to be used is required to have a sufficient molecular weight for forming a film. To this end, it is desirable to set intrinsic viscosity (I.V.) to a value which falls within a range of 0.55 to 1.9dl/g, and more particularly to a value which falls within a range from 0.65 to 1.4dl/g.
It is important that the copolyester film is stretched biaxially. The degree of biaxial stretching can be confirmed by a polarization fluorescence method, a birefringence method, a density gradient pipe method or the like.
When a nylon film is used as the thermoplastic resin film, a condensation polymerization product made of diamine and dicarboxilic acid such as nylon 66, nylon 610 or nylon 612, or a split polymerization product of lactam such as nylon 6, nylon 11 or nylon 12 can be used.

Such a thermoplastic resin film can be manufactured using aknownmethod. For example, anon-stretchedfilmismanufactured by a T-die method or an inflation film forming method and, thereafter, a stretching treatment such as a uniaxial treatment, or a biaxial treatment is further applied to the non-stretched film. A known plasma treatment, flame treatment or the like may also be applied to a surface of the resin film to enhance the adhesiveness of the resin film to a surface of the aluminum plate.

Here, in place of the above-mentioned method for stacking the resin film, coating of organic resin paint or the like may be applied to the aluminum plate to which the surface treatment is applied by a known means to form an organic film.

That is, the biaxially stretched polyester film which is used in the present invention preferably possesses an X-ray diffraction intensity ratio $I_A/I_B$ which satisfies $5 \geq I_A/I_B \geq 1$.

Here, $I_A$ is an X-ray diffraction intensity on a diffraction plane which is parallel to a surface of the polyester film and has a surface distance of approximately 0.34nm (a CuK$\alpha$X-ray diffraction angle being set to a value which falls within a range from 24° to 28°), and $I_B$ is an X-ray diffraction intensity on a diffraction plane which is parallel to the surface of the polyester film and has a surface distance of approximately 0.39nm (a CuK$\alpha$X-ray diffraction angle being set to a value which falls within a range from 21.5° to 24°).

(Measurement of X-ray diffraction intensity ratio $I_A/I_B$)

The X-ray diffraction intensity ratio $I_A/I_B$ is measured as follows using an X-ray diffractometer. As measuring conditions, an X-ray tube (target) made of copper (wavelength $\lambda$=0.1542nm) is used, and a tube voltage and a tube current are respectively approximately 30kV and 100mA, and a light receiving slit with a slit width corresponding to an angle of 0.1° or less which can separate a diffraction peak having a surface distance which is approximately 0.39nm (2$\theta$ being about 22.5°) and a diffraction peak having a surface distance which is approximately 0.34nm (2$\theta$ being about 26°) is selected. A sample is mounted such that an incident angle and a reflection angle of the X ray is set to $\theta$ respectively with respect to a diffraction angle 2$\theta$, and an incident X ray and a diffraction X ray become symmetrical with respect to a normal line of a film surface. An X-ray diffraction spectrum is measured by scanning with the diffraction angle 2$\theta$ set within 20 to 30° while always maintaining an incident angle $\theta$ and a reflection angle $\theta$ at the same value.

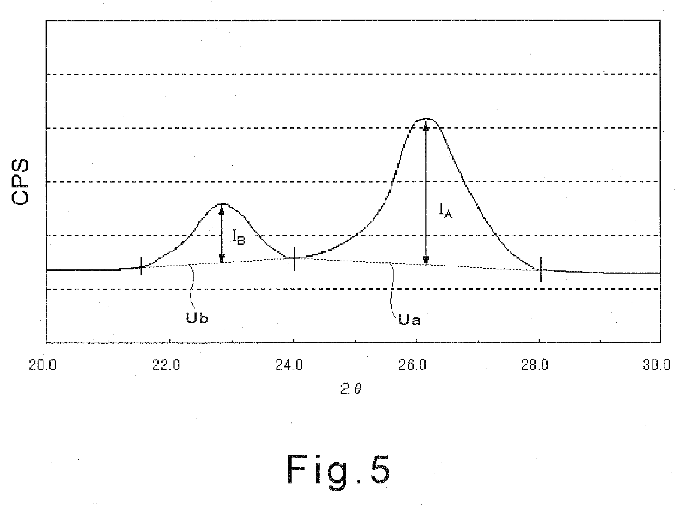

Fig. 5 shows the X-ray diffraction spectrum measured in the above-described manner. Here, $I_A$ is an X-ray diffraction intensity (peak value) on a diffraction plane which is parallel to a surface of the polyester film and has a surface distance of approximately 0.34nm (a CuK$\alpha$X-ray diffraction angle 2$\theta$ being set to a value which falls within a range from 24° to 28°), and $I_B$ is an X-ray diffraction intensity (peak value) on a diffraction plane which is parallel to the surface of the polyester film and has a surface distance of approximately 0.39nm (a CuK$\alpha$X-ray diffraction angle 2$\theta$ being set to a value which falls within a range from 21.5° to 24°). In obtaining an diffraction intensity ratio between the X-ray diffraction intensity $I_A$ and the X-ray diffraction intensity $I_B$, as shown in Fig. 4, respective intensity regions of $I_A$ with 2$\theta$ ranging from 24° to 28° and $I_B$ with 2$\theta$ ranging from 21.5° to 24° are connected by linear lines (Ua, Ub) to form backgrounds, and a ratio between lengths in the direction perpendicular to the backgrounds is set as a value of the diffraction intensity ratio $I_A/I_B$.

The finding that the X-ray diffraction intensity ratio $I_A/I_B$ is closely relevant to the corrosion resistance is acquired as a result of trials and errors made through a large number of experiments carried out by inventors of the present invention. That is, it is considered that when the X-ray diffraction intensity ratio $I_A/I_B$ is increased exceeding a fixed reference value, splitting is liable to occur due to a kind of fibrillation of polyester and the corrosion resistance of a surface of the container or the lid after forming is deteriorated. Further, it is also considered that when the X-ray diffraction intensity ratio $I_A/I_B$ is decreased below a fixed reference value, the thermal stability of the orientation crystals of the polyester film is lowered and hence, cracks occur in the polyester film of an inner surface of the container or the lid during bulging forming or bending forming after heating thus deteriorating the corrosion resistance.

Accordingly, the battery-use container which constitutes the three-piece rectangular can is configured such that, to enhance the corrosion resistance of the container, the X-ray diffraction intensity ratio $I_A/I_B$ is set to the value which falls within the fixed reference.

The X-ray diffraction intensity ratio $I_A/I_B$ can be controlled based on the resin composition and a melting point of the polyester film and a lamination temperature at the time of laminating the polyester film to the aluminum plate. For example, the X-ray diffraction intensity ratio $I_A/I_B$ can be increased by elevating the melting point of the polyester film, while the X-ray diffraction intensity ratio $I_A/I_B$ can be decreased by elevating the lamination temperature at the time of laminating the polyester film to the aluminum plate. Further, with the use of a copolymer polyethylene terephthalate biaxially stretched film, it is possible to further decrease the X-ray diffraction intensity ratio $I_A/I_B$.

Here, in stretching the polyester film, it may be possible to select an area extension magnification ratio within a range from 2.5 to 16.0, particularly within a range from 4.0 to 14.0, at a temperature of 80 to 110°C such that diffraction intensity ratio which satisfies $5 \geq I_A/I_B \geq 1$ in view of the relationship between the area extension magnification ratio and other conditions including the resin composition of polyester.

Further, in thermally fixing the film, it may be possible to select a thermal fixing temperature within a range from 130°C to 240°C, particularly within a range from 150 to 230°C such that the diffraction intensity ratio which satisfies $5 \geq I_A/I_B \geq 1$ in view of the relationship between the thermal fixing temperature and other conditions in the same manner as the area extension magnification ratio.

(Thickness of resin film)

It is desirable to set the thickness of the resin film to a value which falls within a range from 2 to 50μm, particularly to a value which falls within a range from 12 to 40 μm by taking the relationship among barrier property against corrosive components, formability and opening property into consideration.

The resin film may be blended with film blending agents known per se, for example, an anti-blocking agent such as amorphous silica, pigment such as carbon black (black), various charging prevention agent, a lubricant or the like in accordance with a known process.

(Adhesive primer)

An adhesive primer may be interposed between the resin film and the aluminum plate. It is desirable to use the adhesive primer which exhibits excellent adhesiveness to both of the aluminumplate and the resin film. As the typical adhesive primer which exhibits the excellent close adhesiveness and the corrosion resistance, a phenol-epoxy primer which is formed of a resol-type phenol-aldehyde resin derived from various phenols and formaldehyde and a bisphenol-type epoxy resin is named. Particularly, the primer which contains phenol resin and epoxy resin at a weight ratio of 50: 50 to 5: 95, particularly at a weight ratio of 40: 60 to 10: 90 is named. In general, the adhesive primer layer may have a thickness of 0.3 to 5μm.

(Covering of resin film on aluminum plate by coating)

As a method for covering aluminum plate with the resin film by coating, a method which covers a surface of the aluminum plate with a non-stretched film by pressing the non-stretched film to the heated aluminum plate using a roll so as to melt an interface is preferably adopted. The non-stretched film formed by heating and melting resin pellets by an extruder at a temperature 20 to 40°C higher than a melting temperature of resin and by extruding the resin in a film shape from a slit of a T-die, and by cooling the resin with a surface of a casting roller.

Further, in another film forming method, a film-shaped resin extruded from a slit of the T-die is directly and continuously fed to a surface of a moving heated aluminum plate to cover the aluminum plate by coating and is cooled.

In covering the aluminum plate with the resin film by coating, a time during which the resin film to be coated passes through a crystallization temperature region is set as short as possible. It is preferable that the resin film passes through the crystallization temperature region within 10 seconds, particularly within 5 seconds. Accordingly, in covering the aluminum plate by coating, it is preferable that only the aluminum plate is heated, and immediately after the aluminum plate is covered with the resin film by coating, the resin-coated aluminum plate is forcibly cooled.

In cooling the resin-coated aluminum plate, a direct contact of the aluminum plate with cold air or cold water or a pressure contact of the aluminum plate with a cooling roller which is forcibly cooled is used. In covering the aluminum plate with the resin film by coating, by heating the resin film to a temperature close to a melting point and quenching the resin film after coating, it is possible to alleviate the degree of crystalline orientation.

(Preheating treatment of aluminumplate coated with non-stretched film)

In using the non-stretched-film-coated aluminum plate as a material of the top lid or the bottom lid of the three-piece rectangular can, a preheating treatment may be preliminarily applied to the aluminum plate before forming the can lids.

In general, in forming a metal plate which is covered with a various kinds of resin films into can lids or the like using a press, the strong adhesiveness is required between the metal plate and the resin film to prevent cracks in the coated resin film per se or peeling of the resin film from the background metal plate. Since the non-stretched film is not stretched in the longitudinal and lateral directions in plane at the time of film forming, the non-stretched film is in a non-oriented state. Accordingly, the non-stretched film is considered to exhibit no deviation in physical properties in the planner direction of the film, thus allowing the non-stretched film to follow the relatively flexible and strict forming. In this manner, with respect to the non-stretched film, the film per se possesses the favorable workability and hence, the non-stretched film is used in many applications such as press-formed products by being laminated to a surface of a metal plate.

Also in the rectangular can lid, there exists a demand for decreasing a radius of four corner portions of a chuck wall portion of the can lid. Since the strict workability is necessary, the non-stretched film which exhibits excellent workability is applicable to the formation of the rectangular can lid. However, even when the non-stretched film which is considered to possess the favorable workability compared with the biaxially stretched film is used, in the strict forming which requires the radius of four corner portions of the chuck wall portion of the rectangular can lid to assume 10mm or less as in the case of the rectangular can lid, there exists a possibility of generating wrinkles on the film or peeling of the film.

To prevent the occurrence of the above-mentioned film wrinkles on the front and back surfaces of the corner portions of the can lid, with respect to the aluminum plate which is covered with the non-stretched film, by adjusting the degree of crystallization of the resin film which is preliminarily subject to the heat treatment before forming and covers the aluminum plate, it is possible to prevent the occurrence of wrinkles at the time of such forming.

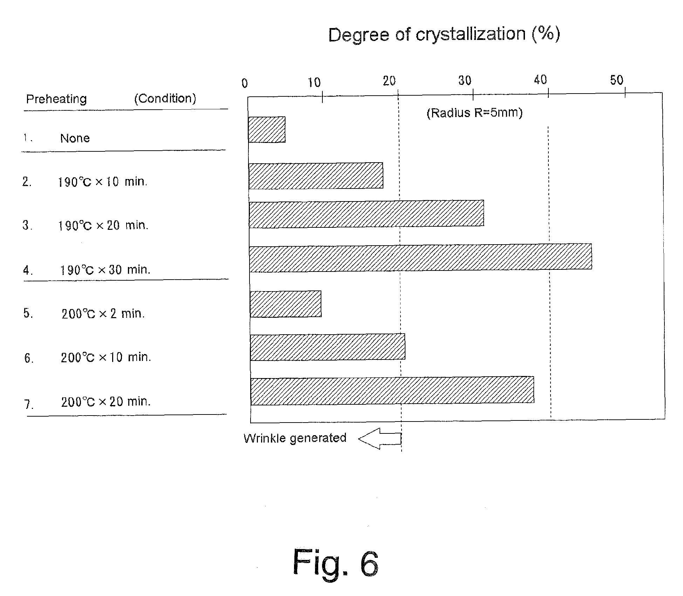

Fig. 6 shows a result of the adjustment. As can be understood from Fig. 6, the degree of crystallization under a condition 1 in which the preliminary heat treatment of the resin film is not performed before forming is 5% and the wrinkles occur in the corner portion. Conditions 2 to 4 are set by changing a heating time at the same temperature of 190°C, wherein the heating times under the respective conditions 2 to 4 are set to 10 minutes (condition 2), 30 minutes (condition 3) and 40 minutes (condition 4). When the heat treatment under the condition 2 is performed, the degree of crystallization becomes 19%. However, the wrinkles occur in the corner portion. When the heat treatment under the condition 3 is performed, the degree of crystallization becomes 30% and no wrinkles occur in the corner portion. The condition 4 is a condition in which the heating treatment time is further prolonged. When the heat treatment is performed under the condition 4, the degree of crystallization is increased to 45% and no wrinkles occur in the corner portion.

Further, to investigate the conditions for the preheating treatment, a heating temperature is elevated to 200°C. Conditions 5 to 7 are set by changing a heating time at the same temperature of 200°C, wherein the heating times under the respective conditions 5 to 7 are set to 2 minutes (condition 5), 10 minutes (condition 6) and 20 minutes (condition 7). When the heat treatment under the condition 5 is performed, the degree of crystallization becomes 10%. However, the wrinkles occur in the corner portion. When the heat treatment under the condition 6 is performed, the degree of crystallization becomes 20% and no wrinkles occur in the corner portion. The condition 7 is a condition in which the heating treatment time is further prolonged. When the heat treatment is performed under the condition 7, the degree of crystallization is increased to 39% and no wrinkles occur in the corner portion.

As can be estimated from the result of the experiment shown in Fig. 6, the higher the heating temperature or the longer the treatment time, the higher the degree of crystallization of the resin film becomes in general. Further, there exists the close relationship between the occurrence of wrinkles at the time of forming and the degree of crystallization of the coated resin film. That is, the minimum degree of crystallization which can prevent the occurrence of wrinkles of the corner portion is 20%, and even when the degree of crystallization is increased (up to 45%), no wrinkles occur.

That is, in forming the rectangular can lid, as the pretreatment which prevents the occurrence of wrinkles in the can-lid corner portion, it is necessary to set the degree of crystallization of the resin film to 20% or more by preheating the resin coated aluminum plate before forming. Here, provided that the degree of crystallization is 20% or more, no wrinkles occur in the can-lid corner portion. However, it is preferable to suppress the heating treatment energy which brings about the increase of a total energy cost of the manufacture of the can lid as small as possible and hence, from an economical viewpoint, an upper limit value of the degree of crystallization which can prevent the occurrence of wrinkles is set to 40%.

In accordance with the above-mentioned results, even when a radius of the corner portion of the rectangular can lid is decreased, it is possible to increase leaking liquid resistance in double seaming without the occurrence of film wrinkles.

(Measurement of degree of crystallization)

The measurement of the degree of crystallization of the coated film is as follows. A front surface layer of the resin film coated on the aluminum plate is shaved and, thereafter, heat treatment of the resin film is performed at the temperature of 185°C for 10 minutes and retort treatment of the resin film is performed at the temperature of 110°C for 60 minutes. Thereafter, the measurement of the degree of crystallization of the film is performed using a differential scanning calorimeter (DSC). The measurement is performed at a temperature elevation rate of 10°C/min using DSC7-RS made by PERKIN ELMER Ltd. The degree of crystallization is calculated using a following formula based on a value of a melting peak $\Delta H$ acquired by the measurement.

$$\text{The degree of crystallization (\%)} = (\Delta H(PET) - |\Delta Hc|)/\Delta H(PET) \times 100 \quad \Delta H(PET) = 122.25 J/g$$

(Manufacture of can body)

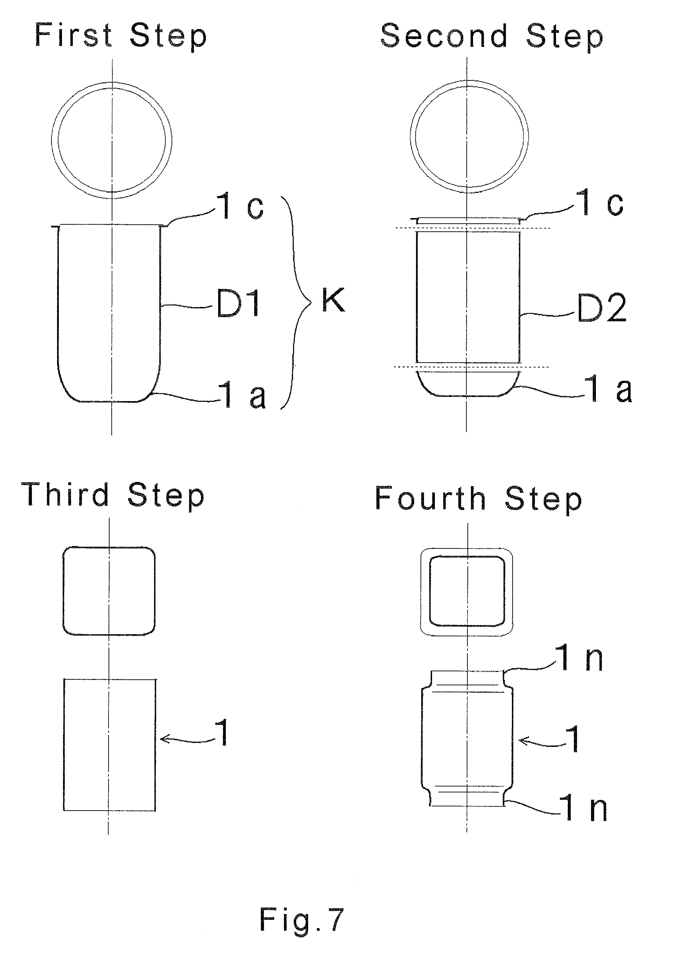

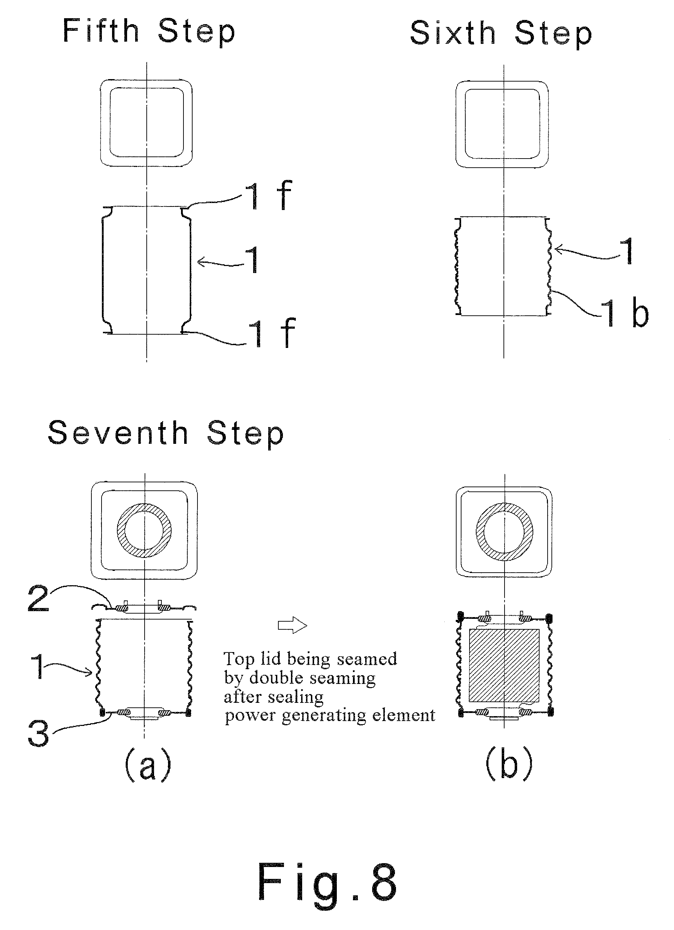

Next, a manufacturing method of a three-piece rectangular can according to the present invention is explained. First of all, in Fig. 7 and Fig. 8, steps for forming the above-mentioned resin-coated aluminum plate into a rectangular can are explained. In respective flow charts shown in Fig. 7 and Fig. 8, an upper side is a plan view and the lower side is a longitudinal cross-sectional view.

The first step is a step for deep-drawing a circular blank in which a bottomed circular can K having a can bottom 1a and a can body D1 is formed. On an upper-end opening portion of the bottomed circular can K, an outer periphery of the circular blank remains as a periphery 1c of the opening portion. The deep drawing in this step may adopt not only a method which draws the blank one time but also a method which continuously performs drawing such as a drawing-re-drawing method.

The second step is a trimming step in which the periphery 1c of the opening portion formed on an upper end of the bottomed circular can K and the can bottom 1a are cut from each other thus separating the periphery 1c from the can body D1 by cutting. The can body D1 forms a cylindrical sleeve D2 which has both ends thereof completely opened and has no seam on a side surface thereof.

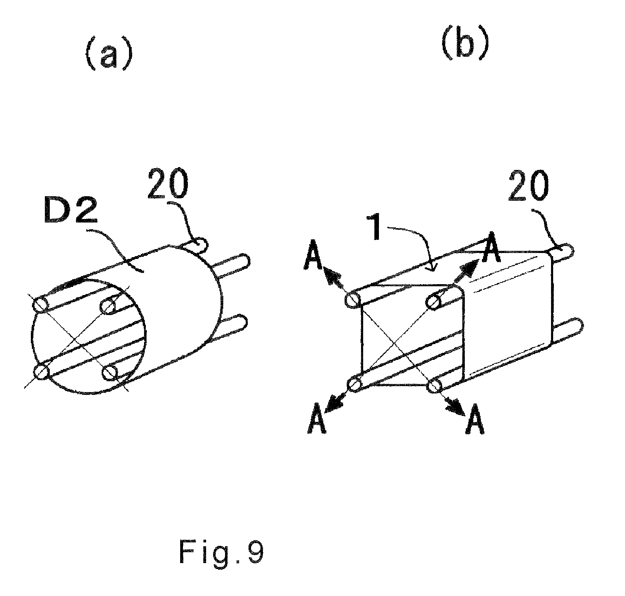

The third step is a reforming step in which the cylindrical sleeve D2 having no seam on the side surface thereof is deformed into a rectangular cross-section from a circular cross-section. A principle of a mechanism which reforms the circular cross-section into the rectangular cross-section is shown in Fig. 9. In Fig. 9(a), four reforming rods 20 having a circular cross-section are arranged around an inner surface of the cylindrical sleeve D2 equidistantly such that the reforming rods 20 are brought into contact with the cylindrical sleeve D2. By moving the reforming rods 20 in an enlarging manner in the diagonal directions (four directions indicated by an arrow A) as shown in Fig. 9(b), the cylindrical sleeve D2 having no seam on the side surface thereof is reformed into the rectangular can body portion 1 having a rectangular shape.

Here, Fig.9a and Fig. 9b show one example in which the reform mechanism is constituted of four rods having a circular cross-section and being moved in an enlarging manner. However, as other method, the reforming mechanism may be configured to arrange a split mold in the inside of the cylindrical sleeve D2 and to expand the cylindrical sleeve D2. The present invention is not limited to such a method.

The fourth step is a necking step in which molds are pushed to outer portions of both ends of the rectangular can body portion 1 for narrowing peripheries of the upper and lower opening portions thus forming necking formed portions 1n which are deformed toward the inside of the rectangular can body portion 1.

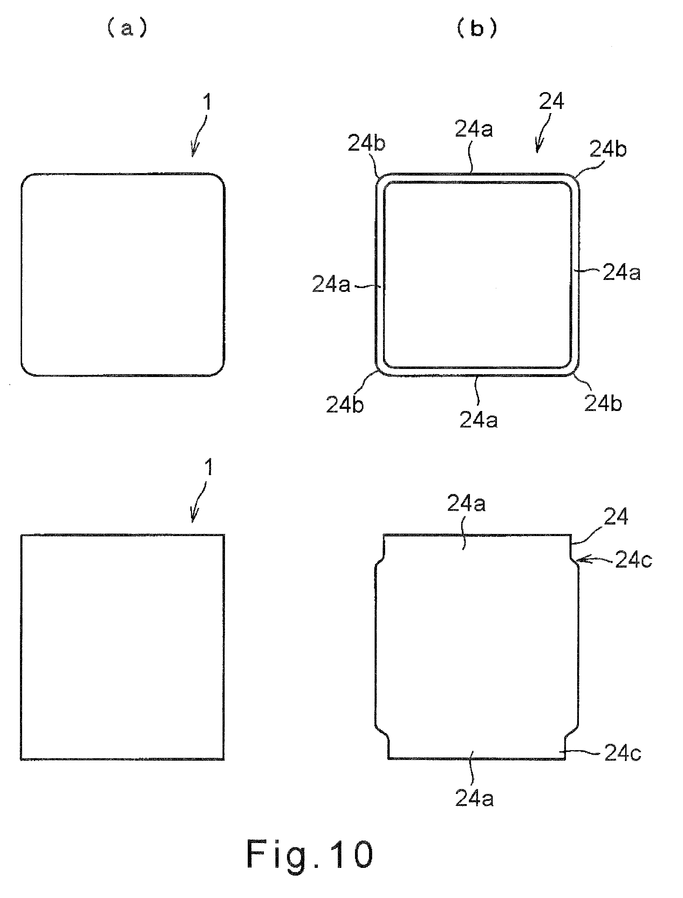

A necking device for forming the necking formed portions In in the rectangular can body portion 1 (hereinafter, simply referred to as a necking device) 30 performs, as shown in Fig. 10(a), for example, necking forming which narrows the upper and lower opening portions of the rectangular can body portion 1 thus enabling the acquisition of a rectangular can 24 having a quadrangular cross-sectional shape which includes necking formed portions 24c as shown in Fig. 10 (b). Necking forming is uniformly performed on flat portions 24a and corner portions 24b.

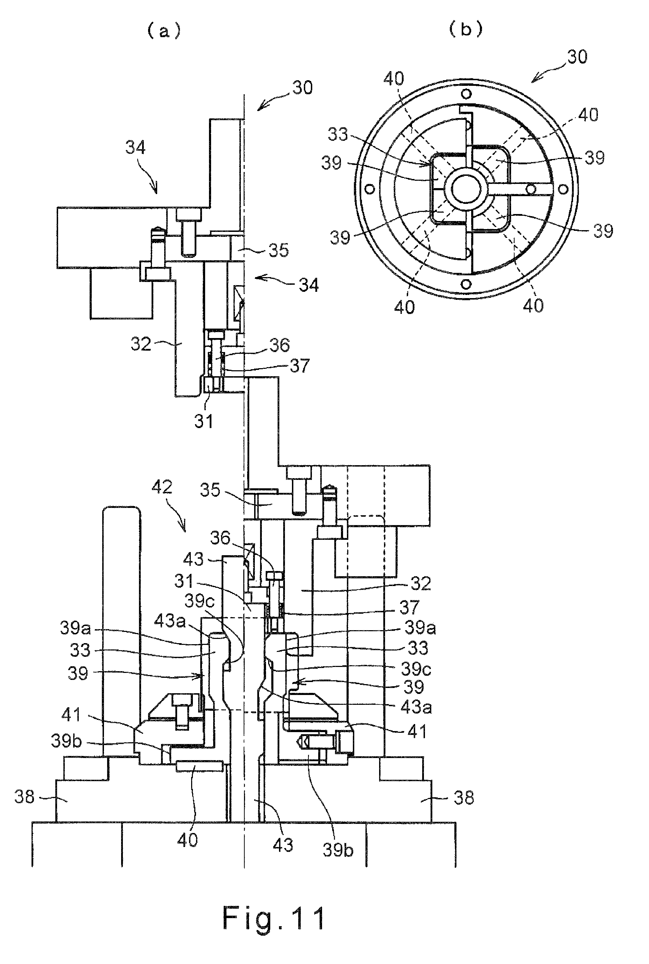

As shown in Fig. 11, such a necking device 30 is, in the same manner as a related art, constituted of a first core 31 which is positioned inside the necking formed portions 24c and supports the necking formed portions 24c, and a necking die 32 which constitutes an outer mold. The necking device 30 further includes a second core 33 which supports lower portions of the necking formed portions 24c and is constituted of an expansible and shrinkable split mold. In such a necking device 30, the first core 31 is supported on a slide 35 of a press mechanism 34 and is configured to be integrally elevated and lowered with the slide 35. Further, to allow the relative elevation and lowering of only the first core 31, the first core 31 is suspended from the slide 35 by way of slidable suspension bolts 36 and springs 37 which bias the first core 31 downwardly. The first core 31 has a profile thereof formed in a quadrangular ring shape and forms support portions 31a having a quadrangular profile corresponding to a profile of the necking formed portions 24c and forms a penetration hole 31b in a center portion of the support portion 31a.

Further, the necking die 32 which constitutes an outer mold includes a portion 32a which is mounted on the slide 35 of the press mechanism 34 using bolts, is arranged outside the first core 31, and has an inner side of a lower end portion thereof positioned outside the rectangular can body portion 1, and a squeezing forming portion 32b for performing necking forming above the portion 32a.

Due to such a constitution, when the slide 35 of the press mechanism 34 descends, the first core 31 and the necking die 32 descend in an interlocking manner. Accordingly, the first core 31 is set as described later and, thereafter, the necking forming is performed by the necking die 32.

On the other hand, the second core 33 which supports the lower portion of the necking formedportions 24c of the rectangular can body portion 1 is mounted on a bolster 38 of the press mechanism 34 and is constituted of the expansible and shrinkable four split molds.

The second core 33 is constituted by combining four split molds 39 which are divided at the center of a rectangular planar portion and respectively have an angle of 90 degrees with respect to respective corner portions. Each split mold 39 includes a core portion 39a which projects toward the inside of the rectangular can body portion 1 and a horizontal portion 39b which is positioned above the bolster 38, wherein an upper portion of the core portion 39a is positioned below the necking formed portions 24c. The second core 33 which is formed of the four split molds 39 is configured to be expansible and shrinkable in a state that the split molds 39 respectively move in the radial direction with respect to the corner portions which are arranged in the diagonal directions of the rectangular shape. Key grooves formed in the respective split molds 39 are guided along keys 40 mounted on the bolster 38 and, at the same time, a ring-shaped pressing member 41 is provided to cover outer portions of segment-like horizontal portions 39b which form a disc-like shape when four split molds 39 are combined. In the inside of the pressing member 41, the respective split molds 39 are movable in an expansible and shrinkable manner.

Further, as a movement unit 42 which performs the expansible and shrinkable movement of the respective split molds 39 of the second core 33, a piston rod 43 is arranged at a center portion of the second core 33, a conical surface 43a is formed on a side surface of a column in a recessed manner. Further, with respect to the second core 33, quarter partial conical surfaces 39c are formed on a piston-rod-43 side of the respective split molds 39 in a projecting manner. Due to such a constitution, by pushing the piston rod 43 in a state that these conical surfaces 43a, 39c are brought into contact with each other, it is possible to bring about an expanded state in which the respective split molds 39 are moved to open toward the outside and hence, the side surface of the column of the piston rod 43 and the cylindrical-portion inner surfaces of the respective split molds 39 are brought into contact with each other thus maintaining the expanded state. On the other hand, to bring the respective split molds 39 into a shrunken state by moving the split molds 39 of the second core 33 in a closing direction, for example, grooves (two grooves in the illustrated example) are formed in a lower portion of a mold portion 39a, and coil springs 44 are mounted in the inside of the grooves in a state that the coil springs 44 surround four split molds 39 thus biasing four split molds 39 in the shrinking direction. Here, in place of the grooves and the coil springs 44, springs may be interposed between an outer peripheral portion of a horizontal portion 39b and the pressingmember 41 so as to bias four split molds 39 in the shrinking direction.

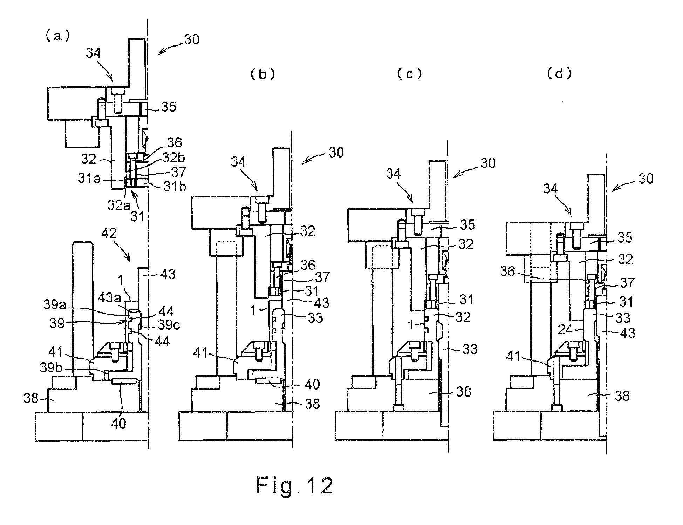

A necking method of a rectangular can is explained in conjunction with a flowchart shown in Fig. 12 together with an operation of the necking device 30 for a rectangular can having the above-mentioned constitution.
First of all, by bringing the second core 33 on the bolster 38 of the press mechanism 34 into a state in which the piston rod 43 of the movement mechanism 42 is pulled up, a closed shrunken state is established, and the rectangular can body portion 1 is set on the outside of the second core 33 (see Fig. 12(a)).
Then, by allowing the slide 35 of the press mechanism 34 to descend, an upper end surface of the piston rod 43 which constitutes the movement unit 42 of the second core 33 which passes through a penetrating portion 11b of the first core 31 is brought into contact with the slide 35 (see Fig. 12(b)).

When the slide 35 further descends from such a state, the piston rod 43 is pushed down and hence, the conical surface 43a and the partial conical surfaces 39c of the respective split mold 39 of the second core 33 are brought into contact with each other whereby the respective split molds 39 are moved to the outside in an opening manner thus bringing the second core 33 into an expanded state so as to support the lower portion of the necking formed portion 24c. Further, on an upper end surface of the second core 33 which is expanded along with the descending of the slide 35, the first core 31 which is suspended from the slide 35 using suspension bolds 36 and springs 37 is placed, and the necking formed portion 24c is supported on a support portion 31a of the first core 31 (see Fig. 12(c)).

From the above-mentioned state in which the necking formed portion 24c is supported on the first core 31 and the lower portion of the necking formed portion 24c is supported on the second core 33, by allowing the further descending of the slide 35 of the press mechanism 34, necking forming of the rectangular can body portion 1 is started by the necking die 32. The rectangular can 24 which is subject to the necking forming is formed such that the flat portions 24a is formed into a predetermined shape in the same manner as the corner portions 24b thus allowing both of the flat portions 24a and the corner portions 24b to acquire uniform and stable shapes. Here, during a period in which the necking die descends, the first core 31 is stopped above the second core 33, and performs the relative movement with respect to the slide at a suspending-bolt-36 portion (see Fig. 12(d)).

When the slide 35 is elevated after forming, the necking die 32 which constitutes the outer mold is elevated in an interlocking manner with the elevation of the slide 35 and, at the same time, the first core 31 is elevated so that the first core 31 is automatically removed from the inside of the rectangular can 24. Accordingly, it is possible to effectively perform the necking forming without requiring mounting and removing of the first core 31 by a manual operation.
Further, by pushing up the piston rod 43 which constitutes the movement unit of the second core 33, the piston rod 43 is moved to close four split molds 39 which are biased in the shrinking direction with the coil spring 44 to bring the split molds 39 into a shrunken state. Accordingly, even when the lower-end opening portion of the rectangular can 24 is already subject to necking forming, it is possible to take out the rectangular can 24.

Further, in the above-mentioned necking method and device, the lower portion of the necking formed portion 24c of the rectangular can body portion 1 is supported by expanding and shrinking the second core 33 and hence, the flat portions 24a can be formed into a uniform and stable shape in the same manner as the corner portions 24b. Further, even when the lower-end opening portion of the rectangular can 24 is already subject to necking forming, by mounting such a rectangular can 24, it is possible to easily perform the necking forming of the upper-end opening portion of the rectangular can 24 and the removal of the rectangular can 24 after forming.
Further, the expanding and shrinking movement of the second core 33 can be performed in an interlocking manner with the elevation/descending of the slide 35 of the press mechanism 34 and hence, there is no increase of steps attributed to necking forming, and necking forming can be also performed without requiring a manipulation to be performed along with the expanding and shrinking movement.

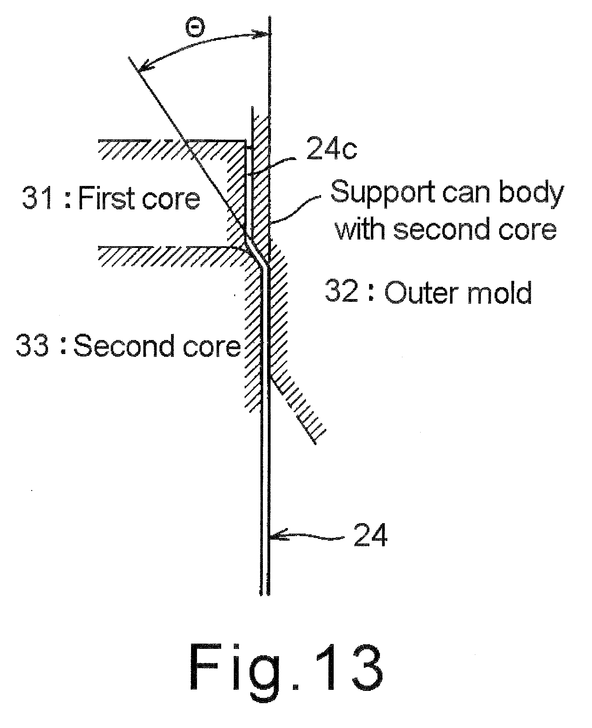

In the necking die 32 which constitutes the outer mold used in such a necking device 30, an angle $\Theta$ of an inclined surface of the necking die 32, that is, as shown in Fig. 13, using a vertical line which extends upwardly from a portion which faces the second core 33 as a reference, a tilting angle Θ of the inclined surface in the direction toward the center of the can body is set to a value which falls within a range of 25 to 35 degrees, preferably 30 degrees with respect to the reference.

When the tilting angle Θ is increased by laying the inclined surface of the necking die 32, an axial load which a portion of the inclined surface of the rectangular can body portion 1 to which necking forming is applied is brought into contact with the necking die 32 firstly is increased and hence, a portion of the lower-end opening portion of the rectangular can body portion 1 which is already subject to necking forming is liable to buckle. That is, due to the axial load applied in the second necking forming, a buckling phenomenon is not generated in the necking formed portion per se but is generated in the portion which is already subject to necking forming. In an experiment in which the tilting angle Θ is set to 45 degrees, the buckling occurs.

On the other hand, when the angle Θ of the inclined surface of the necking die 32 is made small by raising the inclined surface of the necking die 32, a shape effect (shrinking effect) due to necking forming is not clearly observed. Further, there exists a possibility of causing a drawback that the wrinkles or the like are generated.

Further, when an experiment is carried out by setting the angle Θ of the inclined surface of the necking die 32 to 30 degrees, compared to a case in which the angle Θ is set to 45 degrees, the axial load applied to the rectangular can 24 can be decreased and, at the same time, a buckling strength of the portion which is already subject to necking forming can be also increased and hence, all of the above-mentioned drawbacks can be overcome, the upper and lower opening portions of the rectangular can 24 can be formed into required shapes by necking forming, and neither buckling nor the generation of wrinkles is observed.

The above-mentioned narrowing of the opening portions of the rectangular can body portion 1 is performed for setting outer sizes of double seaming portions of the rectangular can body portion 1 when the top lid and the bottom lid are formed by double seaming in a final step to a value equal to or slightly smaller than an outer size of a rectangular can body portion 1. By setting the outer sizes of the double seaming portions to the value equal to or slightly smaller than the outer size of the rectangular can body portion 1, when a large number of rectangular cans are arranged in parallel, it is unnecessary to form a wasteful gap between the neighboring rectangular cans and hence, a volumetric efficiency in the arrangement of the rectangular cans can be enhanced.

Next, the fifth step shown in Fig. 8 is a flanging step. In this step, the necking formed portions In at both ends of the rectangular can body portion 1 which are formed by squeezing in the necking step are expanded outwardly over the whole circumference of the opening portions thus forming flanges 1f. These flanges 1f form end-portion seam margins of the rectangular can body portion 1 in double seaming for mounting the top lid and the bottom lid.

The sixth step is a bead forming step which is performed when necessary. In this step, beads 1b having concave and convex portions which surround the rectangular can body portion 1 are formed. The beads 1b have a function of remarkably increasing a deformation resistance strength of the rectangular can body portion 1 and, at the same time, a function of increasing an outer front surface of the body portion. That is, the beads 1b have a function of easily dissipating or radiating heat generated in the inside of an electric double-layered capacitor casing or a battery casing to the outside. Further, when a large number of rectangular cans are arranged in parallel in the horizontal direction as the electric-double-layered capacitor casings or battery casings, a gap is formed between the neighboring cans due to the concave and convex portions of the beads 1b and hence, the convection of air is generated thus enhancing the radiation of heat.

With respect to the electric double-layered capacitors and the batteries which are used for the regeneration/acceleration assist driving of clean energy vehicles, the increase of power (the increase of an electric current) is in progress, and a demand for the increase of heat radiation of casings used in such applications is increased. The elevation of temperature of a can body promotes softening and deterioration of adhesiveness of the resin film stacked on the aluminum plate. Accordingly, such enhancement of the heat radiation efficiency satisfies demands required by various electronic appliance casings without being limited to casings for the electric double-layered capacitor and batteries.

The seventh step shown in Fig. 8 is a step for mounting the top lid and the bottom lid on the can body.

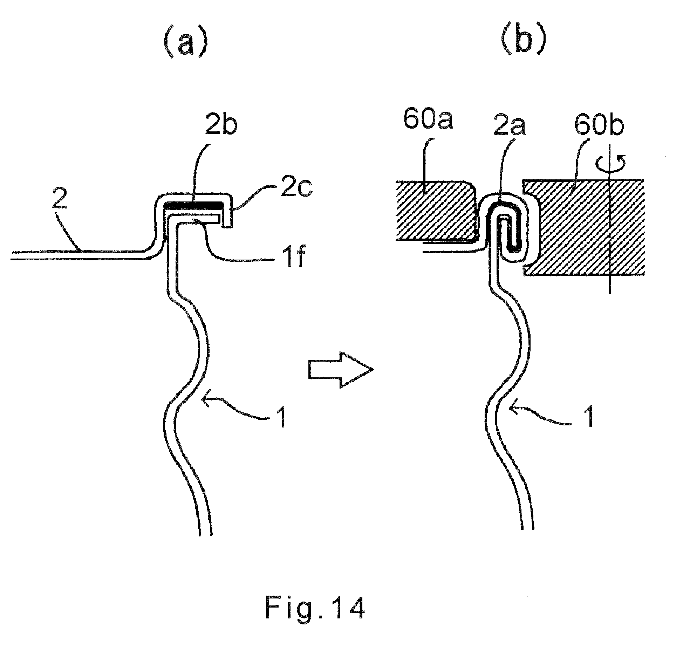

In this seventh step, when the rectangular can is used as a casing for an electric double-layered capacitor casing or the like, the bottom lid is mounted on the rectangular can body portion 1 by double seaming, an electric generating element is filled in the rectangular can body portion 1 and, thereafter, the top lid is mounted on the rectangular can body portion 1 by double seaming to seal the opening. Fig. 14 shows the cross-sectional structure of a double seaming portion before and after double seaming in an enlarged manner. First of all, as shown in Fig. 14(a), a curling portion 2c of the top lid 2 is arranged to align with the opening-portion flange 1f of the rectangular can body portion 1. Here, an organic compound 2b is applied by coating to the whole circumference of an inner surface of the curling portion 2c for ensuring the sealing property and the insulation property of the sealing opening portion.

In the double seaming step shown in Fig. 14(b), in a state that the rectangular can body portion 1 is covered with the top lid 2, a pressure is applied to the opening-portion flange 1f and the curling portion 2c by a seaming roller 60b from an outer periphery of the curling portion 2c while rotating the can body with a rotary roller 60a thus forming double seaming portions 2a, 3a by seaming the top-lid curling portion 2c and the flange 1f in an overlapped state inwardly.

The organic compound 2b is an insulating material having resiliency such as rubber. Conventionally, as such an organic compound 2b, a known material which is used for enhancing sealing property of the double seaming portion or the like is used, for example, one of styrene-butadiene rubber, ethylene propylene rubber, polyisoprene rubber, a polyamide-based resin and a polyolefin resin or a mixed material which is produced by mixing a desired dilution agent or a curing agent into the above-mentioned material may be used.

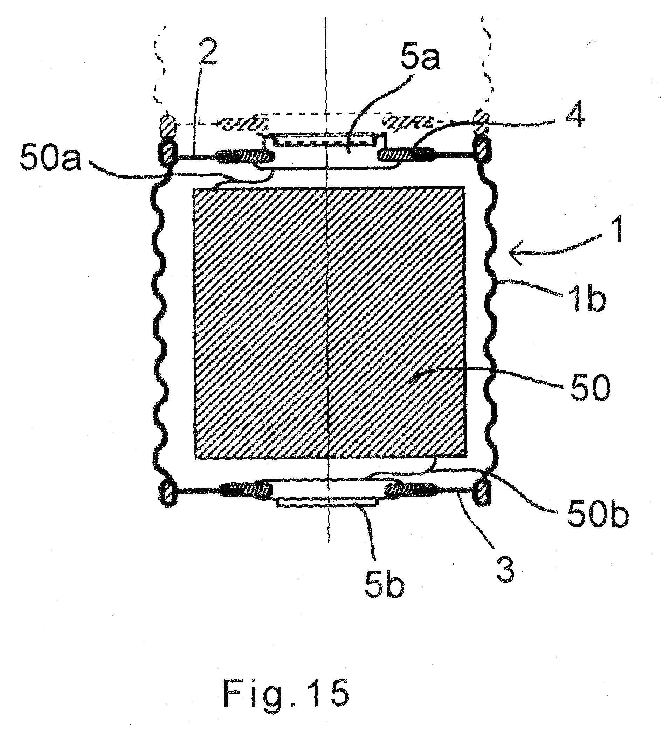

Fig. 15 is a schematic cross-sectional view of the three-piece rectangular can which is formed in the above-mentioned manner when the three-piece rectangular can is used as an electric double-layered capacitor casing. Lead lines (50a, 50b) are respectively led to upper and lower electrodes 5a, 5b formed on the top lid and the bottom lid from upper and lower portions of an electricity generating element 50 filled in the inside of the rectangular can. The upper and lower electrodes 5a, 5b are mounted on the top lid 2 and the bottom lid 3 such that through holes are formed in center portions of the top lid 2 and the bottom lid 3, and the top lid 2 and the bottom lid 3 are mounted in the through holes by way of annular insulators 4 which are fitted in the through holes for establishing the electric insulation between the can body and the electrodes 5a, 5b.
Here, as indicated by wave line shown in Fig. 15, to allow the connection of the electric double-layered capacitor casings in series in the longitudinal direction, a profile of the upper electrode 5a is formed in a female shape and a profile of the lower electrode 5b is formed in a male shape.

(Manufacture of lids)

Here, the above-mentioned top lid and bottom lid are manufactured as follows, for example. First of all, a resin coated aluminum plate is blanked into rectangular plates and these rectangular plates are formed into desired lid shapes by a press. Further, using a mold, recessed portions and through holes are formed in center portions of these lid-shaped plates thus forming the top lid and the bottom lid.
Hereinafter, the biaxially stretched polyester film used in the present invention is explained in further detail.

(Embodiment 1)

A substrate is formed by applying a chromic phosphoric treatment with an amount of chromium of 20mg/m$^2$ in metal chromium conversion to a surface of an aluminum plate (3003-H14) having a plate thickness of 0.5mm and having the composition consisting of 1.1 weight% of Mn, 0.19 weight% of Cu, 0.30 weight% of Si, 0.43 weight% of Fe and a balance of Al.
To one surface of the substrate, a biaxially stretched film (thickness:30$\mu$m) formed of a polyethylene terephthalate/iso phthalate (PET/I) for copolymer resin containing 10 molecular% of isophthalic acid as a copolymer content is laminated at a temperature of 245°C thus manufacturing a resin-coated aluminum plate. This film has a melting point of 240°C and exhibits an X-ray diffraction intensity ratio $I_A/I_B$ of 5.0.
The resin coated aluminum plate obtained by the above-mentioned manner is blanked into a circular blank and, thereafter, drawing forming is applied to the circular blank. After trimming lug portion and a bottom of the opening end, an expander is inserted into the inside of the circular blank to perform expanding forming to enlarge a diameter of the circular blank. Bead forming and necking/flanging forming are applied to a side wall of a can to deform the can into a rectangular canbodyportion. A top lid and a bottom lid are mounted on both-end opening portions by double seaming, and a resin is applied to an inner surface of a container thus manufacturing a rectangular can.

(Embodiment 2)

This embodiment 2 is substantially equal to the embodiment 1 except for that a biaxially stretched film (thickness: 30$\mu$m) which has a melting point different from the melting point of the biaxially stretched film used in the embodiment 1 is laminated to the surface of the substrate used in the embodiment 1 at a temperature of 230°C. A film formed by this embodiment 2 has a melting point of 230°C and an X-ray diffraction intensity ratio of $I_A/I_B$ is 4.0.

(Embodiment 3)

This embodiment 3 is substantially equal to the embodiment 1 except for that a biaxially stretched film (thickness: 30$\mu$m) which has a melting point different from the melting point of the biaxially stretched film used in the embodiment 1 is laminated to the surface of the substrate used in the embodiment 1 at a temperature of 235°C. A film formed by this embodiment 3 has a melting point of 230°C and an X-ray diffraction intensity ratio of $I_A/I_B$ is 3.5.

(Embodiment 4)

This embodiment 4 is substantially equal to the embodiment 1 except for that a biaxially stretched film (thickness:

30μm) which has a melting point different from the melting point of the biaxially stretched film used in the embodiment 1 is laminated to the surface of the substrate used in the embodiment 1 at a temperature of 240°C. A film formed by this embodiment 4 has a melting point of 230°C and an X-ray diffraction intensity ratio of $I_A/I_B$ is 2.0.

(Embodiment 5)

This embodiment 5 is substantially equal to the embodiment 1 except for that a biaxially stretched film (thickness: 30μm) which has a melting point different from the melting point of the biaxially stretched film used in the embodiment 1 is laminated to the surface of the substrate used in the embodiment 1 at a temperature of 250°C. A film formed by this embodiment 5 has a melting point of 230°C and an X-ray diffraction intensity ratio of $I_A/I_B$ is 1.0.

(Comparison Example 1)

To one surface of the substrate which is substantially equal to the substrate used in the embodiment 1, a non-oriented film (thickness: 30 μm) formed of a polyethylene terephthalate/iso phthalate (PET/I) for copolymer resin containing 10 molecular% of isophthalic acid as a copolymer content is laminated at a temperature of 210°C thus manufacturing a resin-coated aluminum plate. This film has a melting point of 210°C and no peaks are detected with respect to the X-ray diffraction intensities $I_A$ and $I_B$.
The resin-coated aluminum plate obtained in the above-mentioned manner is subject to the forming in the same manner as the resin-coated aluminum plate in the embodiment 1 thus manufacturing the rectangular can substantially equal to the rectangular can manufactured in the embodiment 1.

(Comparison Example 2)

This comparison example 2 is substantially equal to the comparison example 1 except for that a biaxially stretched film (thickness: 30μm) which has a melting point different from the melting point of the biaxially stretched film used in the comparison example 1 is laminated to the surface of the substrate used in the comparison example 1 at a temperature of 240°C. A film formed by the comparison example 2 has a melting point of 240°C and an X-ray diffraction intensity ratio of $I_A/I_B$ is 6.0.

(Comparison Example 3)

This comparison example 3 is substantially equal to the comparison example 1 except for that a biaxially stretched film (thickness: 30μm) of polyethylene terephthalate (PET) is laminated to the surface of the substrate used in this comparison example 1 at a temperature of 260°C. A film formed by this comparison example 3 has a melting point of 255°C and an X-ray diffraction intensity ratio of $I_A/I_B$ is 10.0.

(Comparison Example 4)

This comparison example 4 is substantially equal to the comparison example 1 except for that a biaxially stretched film (thickness: 30μm) which has a melting point different from the melting point of the biaxially stretched film used in the comparison example 1 is laminated to the surface of the substrate used in the comparison example 1 at a temperature of 260°C. A film formed by this comparison example 4 has a melting point of 230°C and an X-ray diffraction intensity ratio of $I_A/I_B$ is 0.5.

(Evaluation method)

A corrosive electrolytic solution containing a propylene carbonate salt as a main component is filled in the inside of rectangular cans (battery containers) of embodiments and comparison examples manufactured in the above-mentioned manner, and these samples are left at a temperature of 80 °C for 30 days to evaluate the corrosion resistance (an accelerated test corresponding to a product long-period preservation test). Here, the battery containers for evaluation are sealed without forming through holes in the top lid and the bottom lid. The evaluation is performed on 10 pieces of battery containers for each of these embodiments and comparison examples.

(Evaluation result)

According to a result of the evaluation, with respect to the battery containers of the embodiments 1 to 5, by setting the X-ray diffraction intensity ratio $I_A/I_B$ to values which fall within a range from 1.0 to 5.0, neither discoloring nor floating of film is found on an inner surface of the container even the container is preserved for a long period thus achieving the excellent evaluation on corrosion resistance. Further, also at the time of forming the container, neither floating of film (peeling) nor whitening is found thus also exhibiting excellent formability.

On the other hand, with respect to the containers which use the non-oriented resin film in the comparison example 1, floating of film is found on an inner surface of the container and it is estimated that an inner-surface film is peeled with lapse of time. Further, also with respect to the containers of the comparison examples 2 to 4, at the time of forming the containers, floating of film and whitening are found thus exhibiting poor corrosion resistance.

Although the evaluations on discoloring and floating of film are performed by observing with naked eyes the inner surfaces of the containers by discharging the electrolytic solution after performing the product long-period reservation test. A result of the test is shown in Table 1.

Table 1

| | polyester film | | heat treatment temperature | $I_A/I_B$ | formability | | | | corrosion resistance (80°C/ 30 days; | |
|---|---|---|---|---|---|---|---|---|---|---|
| | resin composition | melting point (°C) | lamination temperature (°C) | | drawing forming | expansion forming | bead forming | flange forming | discolored | floating of film |
| Embodiment 1 | PET/I | 240 | 245 | 5.0 | G | G | G | G | G | G |
| Embodiment 2 | PET/I | 230 | 230 | 4.0 | G | G | G | G | G | G |
| Embodiment 3 | PET/I | 230 | 235 | 3.5 | G | G | G | G | G | G |
| Embodiment 4 | PET/I | 230 | 240 | 2.0 | G | G | G | G | G | G |
| Embodiment | PET/I | 230 | 250 | 1.0 | G | G | G | G | G | G |
| Comparison Example 1 | PET/I (non-oriented) | 210 | 210 | no peak | G | G | G | G | G | B |
| Comparison Example 2 | PET/I | 240 | 240 | 6.0 | G | film-floating: trivial | film-floating: trivial | G | G | F |
| Comparison Example 3 | PET | 255 | 260 | 10.0 | film floated | B | not evaluated not | not evaluated | not evaluated | not evaluated |
| Comparison Example 4 | PET/I | 230 | 260 | 0.5 | film crack: trivial | film whitening: trivial | film whitening: trivial | G | G | F |

PET: polyethylene terephthalate
PET/I: polyethylene terephthalate/isophthalate copolyester
G: good
F: fair
B: bad

Industrial Applicability

As has been explained heretofore, although a conventional three-piece rectangular can having a top lid and a bottom lid forms a seam by joining on a can body portion, a three-piece rectangular can of the present invention having a rectangular can body portion, a top lid and a bottom lid has no seam by joining on the can body portion and hence, there is no possibility of the generation of cracks attributed to a defect of a joint portion which is liable to be generated at the time of performing bead forming or the like. Further, when the three-piece rectangular can of the present invention is applied to a casing of an electric double-layered capacitor or the like, a surface area of the casing is increased and hence, the heat dissipation is increased whereby the deterioration of the battery performance and the can body can be prevented. Accordingly, the three-piece rectangular can of the present invention can cope with the high performance which is required by various casings for electric equipment and batteries of nowadays. Further, the present invention can provide the battery containers which exhibit high corrosion resistant at a low cost.

**Claims**

1. A three-piece rectangular can in which a necking formed portion is formed by applying necking forming to opening portions at both ends of a rectangular can body portion having no seam on a side surface thereof, and a top lid and a bottom lid are seamed by double seaming to the opening portions at both ends of the rectangular can body portion by way of an organic compound, wherein
the three-piece rectangular can is formed of an aluminum plate having an organic film formed on at least one surface thereof, and the organic film is formed on at least inner surfaces of the rectangular can body, the top lid and the bottom lid.

2. A three-piece rectangular can according to claim 1, wherein the rectangular can body portion having no seam on the side surface thereof is formed such that a cylindrical sleeve having no seam on a side surface thereof which is formed by cutting a bottom portion of a bottomed circular can from a circular blank by deep drawing is deformed into a rectangular sleeve and the rectangular sleeve has the opening portions at both ends thereof, and the necking formed portion is formed on the opening portions by applying necking forming to the opening portions.

3. A three-piece rectangular can according to claim 1, wherein the rectangular can body portion having no seam on the side surface thereof is formed such that a cylindrical sleeve having no seam on a side surface thereof which is formed by cutting a bottom portion of a bottomed circular can from a circular blank by deep drawing is deformed into a rectangular sleeve and the rectangular sleeve has the opening portions at both ends thereof, the necking formed portion is formed on the opening portions by applying necking forming to the opening portions and, thereafter, a plurality of beads is formed on the rectangular can body portion in a state that the beads surround the rectangular can body.

4. A three-piece rectangular can according to any one of claims 1 to 3, wherein a through hole is formed in center portions of the top lid and the bottom lid which are mounted on the opening portions at both ends of the rectangular can body portion having no seam on the side surface thereof by double seaming, and an electrode is mounted in the through hole by way of an insulator.

5. A three-piece rectangular can according to any one of claims 1 to 4, wherein the top lid or the bottom lid of the three-piece rectangular can is formed of an aluminum plate to which a non-stretched polyester film which sets a degree of crystallization thereof within a range from 20% to 40% by preheating treatment before forming is applied.

6. A three-piece rectangular can according to any one of claims 1 to 4, wherein the three-piece rectangular can which is used as a battery container and is formed of an aluminum plate which applies a biaxially stretched polyester film to at least the inner surfaces of the rectangular can body portion, the top lid and the bottom lid, and
the biaxially stretched polyester film possesses an X-ray diffraction intensity ratio which satisfies $5 \geq I_A/I_B \geq 1$, wherein $I_A$ is an X-ray diffraction intensity on a diffraction plane which is parallel to a surface of the polyester film and has a surface distance of approximately 0.34nm (a CuK$\alpha$X-ray diffraction angle being set to a value which falls within a range from 24° to 28°), and $I_B$ is an X-ray diffraction intensity on a diffraction plane which is parallel to the surface of the polyester film and has a surface distance of approximately 0.39nm (a CuK$\alpha$X-ray diffraction angle being set to a value which falls within a range from 21.5° to 24°).

7. A manufacturing method of a three-piece rectangular can being **characterized in that** a circular blank formed of an aluminum plate which forms an organic film on at least one surface thereof is formed into a bottomed circular can by deep drawing such that the organic film forms an inner side of the can, a cylindrical sleeve having no seam on a side surface thereof is formed by cutting a bottom portion of the bottomed circular can, a rectangular can body portion having no seam on a side surface thereof is formed by deforming the cylindrical sleeve into a rectangular shape, a necking formed portion is formed by applying necking forming to opening portions at both ends of the rectangular can body, and a top lid and a bottom lid are mounted on the opening portions at both ends of the rectangular can body by double seaming by way of an organic compound.

8.  A necking method of a rectangular can being **characterized in that**, in performing necking forming for squeezing an opening portion of a rectangular can body of a rectangular can, a first core is arranged in the inside of a necking formed portion of the rectangular can, a second split core which is expansible and shrinkable is arranged on a lower portion of the necking formed portion and, thereafter, the necking formed portion is formed using a necking die.

9.  A necking method of a rectangular can according to claim 8, wherein the rectangular can body is arranged outside the second core on a bolster, the second core is moved in an expansible manner in a state that the second core supports a lower portion of the necking formed portion and, thereafter, the first core mounted on a slide is lowered toward the second core thus positioning the first core at the necking formed portion, and the necking die is lowered to perform the necking forming.

10. A necking method of a rectangular can according to claim 8 or claim 9, wherein the expansion and the shrinking of the second core and the insertion and the removal of the first core are performed in an interlocking manner with lowering and elevation of the slide.

Fig.1

Fig.2

Fig.3

EP 1 886 740 A1

(a)

11

10

11

(b)

10

12  11

Fig.4

24

Fig.5

Degree of crystallization (%)

| Preheating | (Condition) |
|------------|-------------|
| 1. | None |
| 2. | 190°C × 10 min. |
| 3. | 190°C × 20 min. |
| 4. | 190°C × 30 min. |
| 5. | 200°C × 2 min. |
| 6. | 200°C × 10 min. |
| 7. | 200°C × 20 min. |

(Radius R=5mm)

Wrinkle generated

Fig. 6

# First Step

1 c

D1

K

1 a

# Second Step

1 c

D2

1 a

# Third Step

1

# Fourth Step

1 n

1

1 n

Fig.7

# Fifth Step

1 f

1

1 f

# Sixth Step

1

1 b

# Seventh Step

2

1

3

(a)

⇒

Top lid being seamed
by double seaming
after sealing
power generating element

(b)

# Fig.8

(a)

(b)

D2

20

1

20

Fig.9

( a )                                                    ( b )

Fig.10

Fig.11

Fig.12

Θ

24c

31 : First core

Support can body
with second core

32 : Outer mold

33 : Second core

24

# Fig.13

(a)

(b)

Fig.14

Fig.15

## INTERNATIONAL SEARCH REPORT

| | International application No. |
|---|---|
| | PCT/JP2006/309757 |

**A. CLASSIFICATION OF SUBJECT MATTER**
*B21D41/04*(2006.01)i, *B21D51/26*(2006.01)i, *B65D6/30*(2006.01)i, *H01M2/02*
(2006.01)i

According to International Patent Classification (IPC) or to both national classification and IPC

**B. FIELDS SEARCHED**

Minimum documentation searched (classification system followed by classification symbols)
B21D41/04, B21D51/26, B65D6/30, H01M2/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 61-33930 A (Honshu SEnkan Kabushiki Kaisha),<br>18 February, 1986 (18.02.86),<br>Full text<br>(Family: none) | 1-2,7<br>3-6,8-10 |
| Y<br>A | JP 2004-154852 A (Toyo Seikan Kaisha, Ltd.),<br>03 June, 2004 (03.06.04),<br>Claims<br>(Family: none) | 1-2,7<br>3-6,8-10 |
| Y<br>A | WO 2004/113181 A1 (TOYO SEIKAN KAISHA, LTD.),<br>29 December, 2004 (29.12.04),<br>Full text; Fig. 6<br>& EP 1640277 A1     & AU 2004249586 A1 | 1-2,7<br>3-6,8-10 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 August, 2006 (07.08.06) | 15 August, 2006 (15.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/309757

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-114390 A  (Mitsubishi Plastics, Inc.),<br>15 April, 2004 (15.04.04),<br>Claims; Par. Nos. [0014] to [0015]<br>(Family: none) | 5 |
| A | JP 11-273631 A  (Sanyo Electric Co., Ltd.),<br>08 October, 1999 (08.10.99),<br>Full text<br>(Family: none) | 4-6 |
| A | JP 8-229622 A  (Daiwa Can Co.),<br>10 September, 1996 (10.09.96),<br>Claim 1; Figs. 1 to 4<br>(Family: none) | 8-10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002343310 A
- JP 3427216 B